# EUROPÄISCHE PATENTANMELDUNG

(11) **EP 4 311 046 A1**
(43) Veröffentlichungstag der Anmeldung: **24.01.2024**
(21) Anmeldenummer: 23186318.4
(22) Anmeldetag: 19.07.2023
(51) Int. Cl.: H01T 4/06, H02B 1/21

(54) **ELEKTRISCHES ÜBERSPANNUNGSSCHUTZGERÄT**

(30) Priorität: 19.07.2022 LU 502520
(71) Anmelder: PHOENIX CONTACT GmbH & Co. KG, 32825 Blomberg (DE)
(72) Erfinder: Ramsel, Christian, 33161 Hövelhof (DE); Sagebiel, Hannes, 2018 Antwerpen (BE)
(74) Vertreter: RCD-Patent Giesen, Schmelcher & Griebel Patentwanwälte PartG mbB

(57) **Zusammenfassung**

Die Erfindung betrifft ein elektrisches Überspannungsschutzgerät (1) aufweisend
• Ein Gehäuse zur Aufnahme von Überspannungsschutzeinrichtungen,
• Wobei das Gehäuse erste elektrische Verbindungsmittel (6) zur Verbindung mit parallelen Schienen eines elektrischen Verteilsystems (N, L1, L2, L3, PE) aufweist.

## Beschreibung

Die Erfindung betrifft ein elektrisches Überspannungsschutzgerät.

### Hintergrund

In jedem Haushalt befindet sich für die Zuführung von elektrischer Energie aus dem Netz eines Energieversorgers ein Zählerplatz. Dieser Zählerplatz wird häufig in einen Schalt- bzw. Sicherungsschrank integriert, sodass von dort aus die Unterverteilung vorgenommen werden kann.

Typischerweise befinden sich dort auch Elemente zum Schutz der Unterversorgung vor Überströmen, z.B. durch Kurzschlüsse, und/oder auch Überspannungsschutzeinrichtungen.

Insbesondere mit der Zunahme von elektronischen Geräten geht ein Trend einher diese empfindlich auf Überspannung reagierenden Geräte zu schützen.

Weiterhin ist es- insbesondere durch die zunehmende Anzahl von Einspeisepunkten für Solar- und/oder Windkraftanlagen, als auch durch die Bereitstellung von leistungsstarken Abnahmepunkten zur Ladung von Elektromobilen -notwendig die bisherigen elektromechanischen Zähler durch elektronische Zähler zu ersetzen.

Die elektrische Versorgung eines elektrischen Zählers, insbesondere eines sogenannten SmartMeters, und/oder weiterer Einrichtungen, wie z.B. ein Router/Modem (z.B. zur Übermittlung von Verbrauchs- und/oder Leistungsdaten), wird dabei im netzseitigen Anschlussraum, d.h. noch vor dem Zähler abgegriffen.

Hierzu gibt es auch in einzelnen Ländern, wie z.B. Deutschland, normative Vorgaben., z.B. VDE-AR-N 4100, erschienen im April 2019.

Zugleich ist aber festzustellen, dass das Platzangebot, insbesondere im netzseitiger Anschlussraum, gering ist, sodass eine sichere Anbindung bei gleichzeitiger Erfüllung enger Raumvorgaben und außerdem eine leichte Montage wünschenswert ist.

Aus dem Stand der Technik ist das deutsche Gebrauchsmuster DE 20 2022 101 208 U1 bekannt. In diesem wird ein Überspannungsschutzgerät bereitgestellt, dass zudem einen weiteren elektrisch isoliert geführten Abgriff von Potentialen bereitstellt. Allerdings verwendet diese Vorrichtung gleichartige Abgriffe, sodass die Montage bereits bei einer leichten Verkippung schwierig ist.

Ausgehend hiervon hat sich die Anmeldung zum Ziel gesetzt die Bereitstellung der gewünschten Funktionalitäten auch unter beschränkten Raumbedingungen zu ermöglichen, wobei der Einbau bevorzugt einfach gestaltet sein soll.

Die Aufgabe wird gelöst durch ein elektrisches Überspannungsschutzgerät nach dem unabhängigen Anspruch. Vorteilhafte Ausgestaltungen der Erfindung sind in den Unteransprüchen angegeben.

### Kurzdarstellung der Figuren

Nachfolgend wird die Erfindung unter Bezugnahme auf die anliegende Zeichnung anhand bevorzugter Ausführungsformen näher erläutert.

### Es zeigen

Fig. 1 schematisch eine vorderseitige Ansicht auf eine Anordnung eines erfindungsgemäßen elektrischen Überspannungsschutzgerätes auf Schienen eines elektrischen Verteilsystems,
Fig. 2a und 2b schematisch Ausführungsformen einer Überspannungsschutzeinrichtung gemäß erfindungsgemäßer elektrischer Überspannungsschutzgeräte,
Fig. 3a und 3b schematisch weitere Ausführungsformen einer Überspannungsschutzeinrichtung gemäß erfindungsgemäßer elektrischer Überspannungsschutzgeräte,
Fig. 4 schematisch eine rückwärtige Ansicht auf eine Anordnung eines erfindungsgemäßen elektrischen Überspannungsschutzgerätes auf Schienen eines elektrischen Verteilsystems,
Fig. 5 schematisch eine seitliche Schnittzeichnung zur Erläuterung eines Aspektes erfindungsgemäßer elektrischer Überspannungsschutzgeräte,
Fig. 6 schematisch eine seitliche Schnittzeichnung zur Erläuterung eines weiteren Aspektes erfindungsgemäßer elektrischer Überspannungsschutzgeräte, und
Fig. 7 schematisch eine beispielhafte Verschaltung von Überspannungsschutzeinrichtung gemäß erfindungsgemäßer elektrischer Überspannungsschutzgeräte.

### Ausführliche Darstellung der Erfindung in Bezug auf die Zeichnungen

Nachfolgend wird die Erfindung eingehender unter Bezugnahme auf die Figuren dargestellt werden.

Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden, soweit nicht explizit als reine Alternative dargestellt.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Soweit nachfolgend Verfahren beschrieben werden, sind die einzelnen Schritte eines Verfahrens in beliebiger Reihenfolge anordbar und/oder kombinierbar, soweit sich durch den Zusammenhang nicht explizit etwas Abweichendes ergibt. Weiterhin sind die Verfahren - soweit nicht ausdrücklich anderweitig gekennzeichnet - untereinander kombinierbar.

Angaben mit Zahlenwerten sind in aller Regel nicht als exakte Werte zu verstehen, sondern beinhalten auch eine Toleranz von +/-1% bis zu +/- 10 %.

Bezugnahme auf Standards oder Spezifikationen oder Normen sind als Bezugnahme auf Standards bzw. Spezifikationen bzw. Normen, die zum Zeitpunkt der Anmeldung und/oder - soweit eine Priorität beansprucht wird - auch zum Zeitpunkt der Prioritätsanmeldung gelten / galten zu verstehen. Hiermit ist jedoch kein genereller Ausschluss der Anwendbarkeit auf nachfolgende oder ersetzende Standards oder Spezifikationen oder Normen zu verstehen.

In unterschiedlichen Ausführungsformen der Erfindung weist ein elektrisches Überspannungsschutzgerät 1 ein Gehäuse zur Aufnahme von Überspannungsschutzeinrichtungen ÜSE1 ... ÜSE4 auf.

Die Anzahl und Ausgestaltung der Überspannungsschutzeinrichtungen ÜSE1 ... ÜSE4 können je nach zu schützendem Netz in Anzahl und Ausgestaltung variieren.

Ebenso können einzelne oder auch alle der Überspannungsschutzeinrichtungen ÜSE1 ... ÜSE4 sowohl integriert als auch steckbar vorgesehen sein.

Wechselbare Überspannungsschutzeinrichtungen ÜSE1 ... ÜSE4 bieten den Vorteil bei Ausfall oder drohendem Ausfall leicht im laufenden Betrieb gewechselt werden zu können.

Die genaue Anordnung der Überspannungsschutzeinrichtungen ÜSE1 ... ÜSE4 ist dabei dem Fachmann überlassen und kann sich an ergonomischen Überlegungen ebenso wie an technischen Überlegungen orientieren.

Häufig werden die Überspannungsschutzeinrichtungen ÜSE1 ... ÜSE4 eher nebeneinanderliegend und zentral angeordnet.

Häufig werden z.B. Überspannungsschutzeinrichtungen ÜSE1 ... ÜSE4, die Varistoren aufweisen, wechselbar ausgeführt, während Überspannungsschutzeinrichtungen ÜSE1 ... ÜSE4, die keine Varistoren aufweisen, sondern z.B. nur eine Funkenstrecke FS, eher integriert vorgesehen sind.

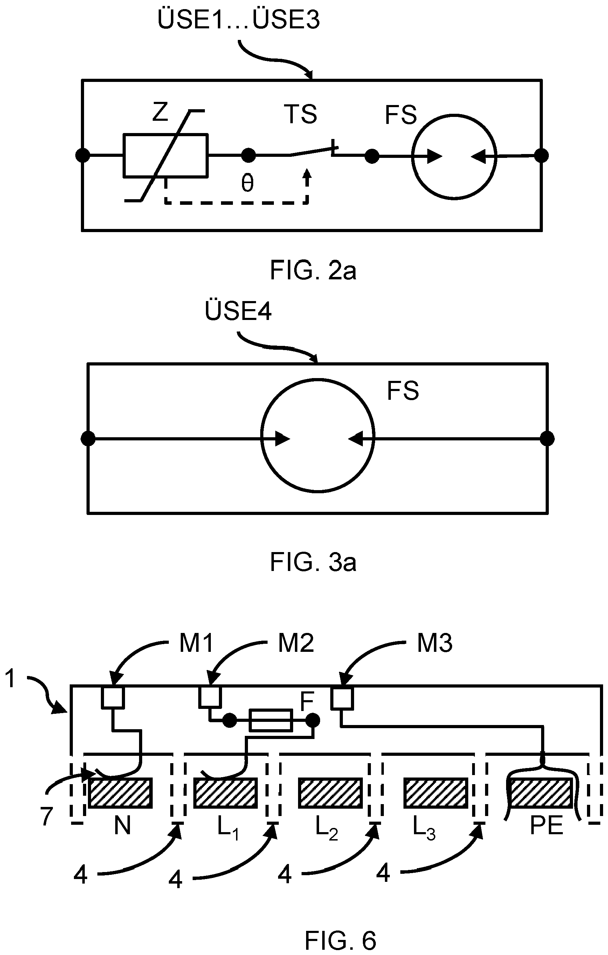

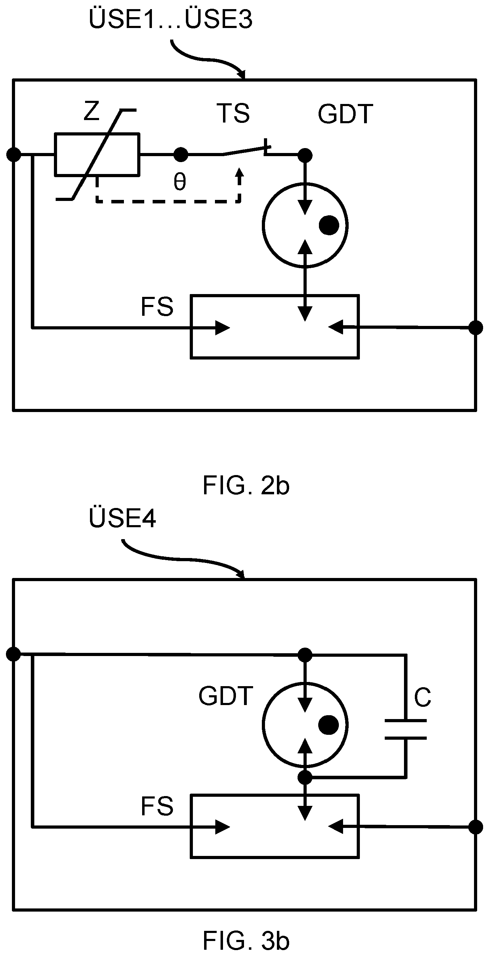

Beispielhaft ist in der Figur 2a eine Überspannungsschutzeinrichtung ÜSE1 ... ÜSE3 gezeigt, die Varistoren Z aufweist. Diese werden in aller Regel mit einer thermischen Trennstelle TS versehen. Ebenso weisen diese häufig auch eine optionale Funkenstrecke FS auf. In einzelnen Bereichen, beispielsweise im Vorzählerbereich, kann die Verwendung von Funkenstrecken FS auch normativ vorgegeben sein. Insbesondere für den Vorzählerbereich, jedoch nicht hierauf beschränkt, kann es vorteilhaft sein eine Überspannungsschutzeinrichtung ÜSE1 ... ÜSE3 gemäß Figur 2b zu verwenden. Diese weist z.B. eine Funkenstrecke FS mit Hilfselektrode und einen Zündkreis auf. Der Zündkreis kann beispielhaft in Serie einen Gasableiter GDT als auch einen Varistor Z als auch eine thermische Trennstelle TS aufweisen.

Weiter beispielhaft ist in Figur 3a eine Überspannungsschutzeinrichtung ÜSE4 gezeigt, die keinen Varistoren Z aufweist, sondern nur eine Funkenstrecke FS aufweist.. Insbesondere für den Vorzählerbereich, jedoch nicht hierauf beschränkt, kann es vorteilhaft sein eine Überspannungsschutzeinrichtung ÜSE4 gemäß Figur 3b zu verwenden. Diese weist z.B. eine Funkenstrecke FS mit Hilfselektrode und einen Zündkreis auf. Der Zündkreis kann beispielhaft einen Gasableiter GDT als auch einen parallelen Kondensator C aufweisen.

Ohne Beschränkung der Allgemeinheit können an den jeweiligen Überspannungsschutzeinrichtungen ÜSE1 ... ÜSE4 auch Elemente zur Überwachung des Zustandes als auch Mittel zur lokalen als auch entfernten Statusanzeige vorgesehen sein.

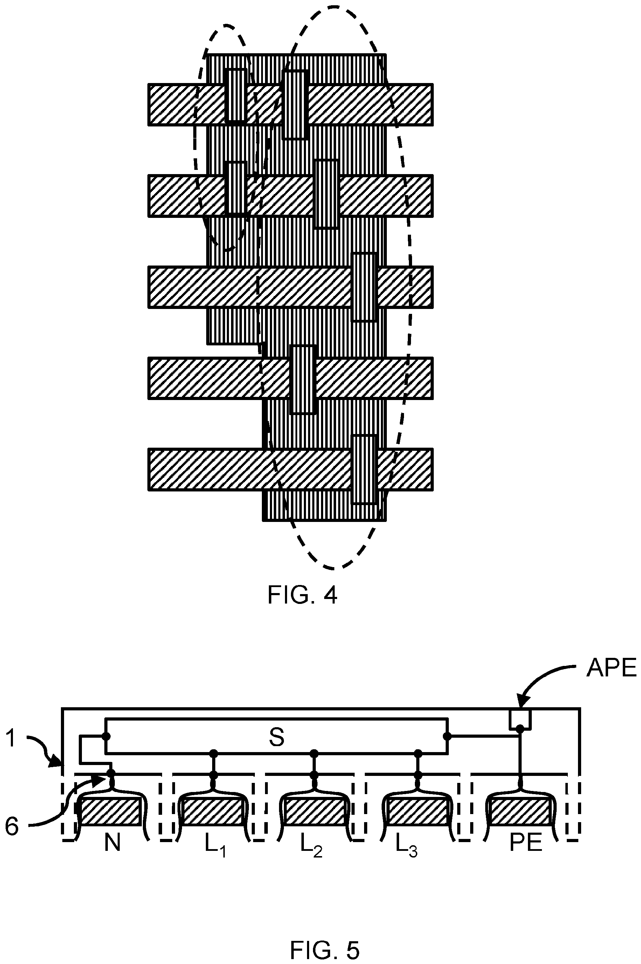

In unterschiedlichen Ausführungsformen der Erfindung weist das Gehäuse erste elektrische Verbindungsmittel 6 zur Verbindung mit parallelen Schienen eines elektrischen Verteilsystems N, L1, L2, L3, PE auf, die symbolisch in Figur 5 dargestellt sind. Wiederum sei angemerkt, dass die Anzahl der Schienen je nach verwendetem System des zu schützenden Netzes variieren kann. In aller Regel weisen die Schienen eine einheitliche Breite auf. Ebenso weisen die Schienen in aller Regel eine einheitliche Dicke auf. Typischerweise weisen Zählerplätze 12 mm x 5 mm - Sammelschienen auf, die einen Abstand von 40 mm haben. In Systemen mit höheren Nennströmen können die Sammelschienen auch andere Stärken aufweisen, z.B. 12 mm x 10 mm.

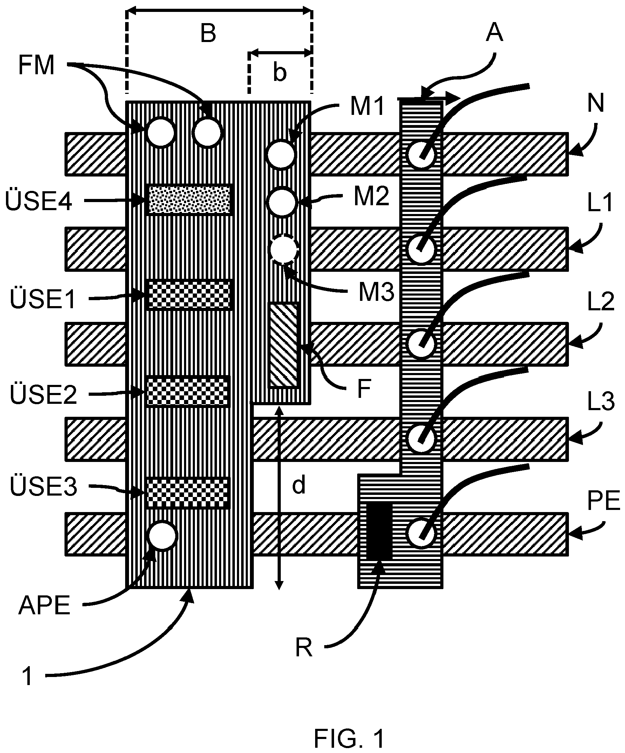

In unterschiedlichen Ausführungsformen der Erfindung weist das Gehäuse - wie aus den Figuren 1 und 4 ersichtlich - einen Rückschnitt auf. Im Unterschied zu einer Ausnehmung, die einen Vor- und einen Rücksprung aufweist, ist ein Rückschnitt derart, dass die Gehäusebreite B bis zum Rand, d.h. über eine Länge d, um eine Länge b vermindert ist. Die Gehäusebreite B kann durch Normen, wie z.B. die DIN 43 880 vom Dezember 1988 vorgegeben sein. Durch den Rückschnitt, der sich insbesondere auch im Bereich des Schutzleiters PE befinden kann, wird ein ergonomisches Handling beim Ein- als auch Ausbau ermöglicht.

In unterschiedlichen Ausführungsformen der Erfindung erstreckt sich der Rückschnitt über mehrere Schienen des elektrischen Verteilsystems. Die Länge des Rückschnittes kann z.B. 2 oder mehr Schienen betragen. Beispielsweise kann der Rückschnitt so gestaltet sein, dass zumindest ein elektrisches Anschlusselement A mit einer sich seitlich in Achsenrichtung einer Schiene versetzt angeordneter Verrastung R im Wesentlichen formschlüssig montiert werden kann. Ein solches passives elektrisches Anschlusselement A stellt z.B. eine Drahtverbindung zwischen den Schienen des elektrischen Verteilsystems her und wird häufig auch als Einspeiseadapter bezeichnet.

In unterschiedlichen Ausführungsformen der Erfindung weist das Gehäuse - siehe Figur 6 -zweite elektrische Verbindungsmittel 7 zur Verbindung mit parallelen Schienen eines elektrischen Verteilsystems N, L1, L2, L3, PE auf, wobei die Anzahl der zweiten elektrischen Verbindungsmittel 7 geringer ist als die Anzahl der ersten elektrische Verbindungsmittel 6.

Beispielsweise kann vorgesehen sein, dass nur zwei oder drei zweite elektrische Verbindungsmittel 7 vorgesehen sind z.B. für einen Neutralleiter N, eine der Phasen L1, L2, L3 und eventuell einen Schutzleiter PE.

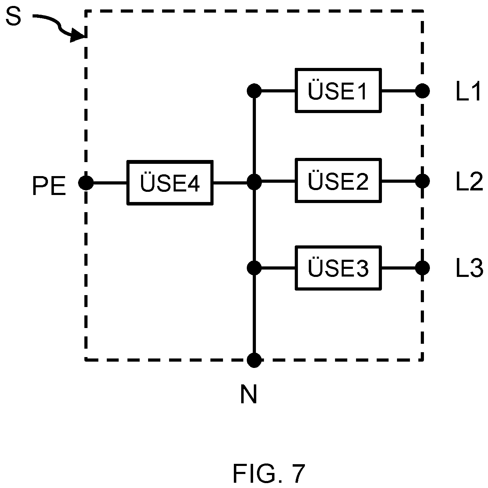

In unterschiedlichen Ausführungsformen der Erfindung - siehe Figur 5 - stellen die ersten Verbindungsmittel 6 sowohl eine elektrische Verbindung als auch eine mechanische Fixierung des elektrischen Überspannungsschutzgerätes auf dem elektrischen Verteilsystems N, L1, L2, L3, PE) bereit. Dazu können die ersten Verbindungsmittel 6 tulpenartig ausgeführt sein, sodass ein einfaches Einführen möglich ist und bei genügender Einführtiefe metallische Zungen federnd die Schiene umklammern. Dies ermöglicht zugleich auch eine einfache Demontage. Die tulpenartige Ausführung kann dabei so gestaltet sein, dass diese auch auf unterschiedliche Schienenstärken (z.B. 5 mm / 10 mm) einen sichern Kontakt und eine sichere Halterung bereitstellen. Die interne Verschaltung S ist nur beispielhaft in Figur 7 angedeutet.

In unterschiedlichen Ausführungsformen der Erfindung stellen zweite Verbindungsmittel 7 nur eine elektrische Verbindung aber keine mechanische Fixierung des elektrischen Überspannungsschutzgerätes auf dem elektrischen Verteilsystems N, L1, L2, L3, PE bereit.

In unterschiedlichen Ausführungsformen der Erfindung stellen die zweiten Verbindungsmittel 7 Potentiale der kontaktierten Schienen zum Abgriff am Gerät bereit. Beispielsweise liegen die zweiten Verbindungsmittel 7 nur federnd an. Dies kann z.B. durch direkte Kontaktfedern oder durch federbeaufschlagte Kontaktstifte realisiert werden.

In unterschiedlichen Ausführungsformen der Erfindung sind die ersten Verbindungsmittel 6 und die zweiten Verbindungsmittel 7 - wie in den Figuren 5 und 6 gezeigt - innerhalb des elektrischen Überspannungsschutzgerätes 1 isoliert voneinander.

In unterschiedlichen Ausführungsformen der Erfindung sind an der vom elektrischen Verteilsystem N, L1, L2, L3, PE abgewandten Seite dritte Verbindungsmittel M1, M2, M3 zum Anschluss eines externen Mess- und/oder Steuergeräts vorgesehen. Die Anzahl der dritten Verbindungsmittel kann dabei an den Anforderungen orientiert sein, sodass es z.B. ausreichen kann nur zwei Anschlüsse M1, M2, für den Neutralleiter N und für eine der Phasen L1, L2, L3 zur Verfügung zu stellen.

Die dritten Verbindungsmittel M1, M2, M3 können unterschiedlich ausgestaltet sein, z.B. als Push-In-Kontakt, Schraubkontakt, Klemmkontakt, etc.

In unterschiedlichen Ausführungsformen der Erfindung weist das elektrische Überspannungsschutzgerät 1 weiterhin eine Überstromschutzeinrichtung F auf, die eines der an den dritten Verbindungsmitteln M1, M2, M3 zur Verfügung gestellten Potentiale schützt.

In unterschiedlichen Ausführungsformen der Erfindung ist die Überstromschutzeinrichtung F steck- und wechselbar.

In unterschiedlichen Ausführungsformen der Erfindung weist das elektrische Überspannungsschutzgerät 1 weiterhin mehrere Überspannungsschutzeinrichtungen ÜSE1, ÜSE2, ÜSE3, ÜSE4 zum Schutz vor Überspannungen auf.

In unterschiedlichen Ausführungsformen der Erfindung sind die mehreren Überspannungsschutzeinrichtungen ÜSE1, ÜSE2, ÜSE3, ÜSE4 steck- und wechselbar.

In unterschiedlichen Ausführungsformen der Erfindung weist das elektrische Überspannungsschutzgerät 1 weiterhin einen Anschluss zur Kontaktierung eines Schutzpotentiales APE an der vom elektrischen Verteilsystem N, L1, L2, L3, PE abgewandten Seite auf.

In unterschiedlichen Ausführungsformen der Erfindung weist das elektrische Überspannungsschutzgerät 1 weiterhin einen oder mehrere Anschlüsse für eine Fernmeldeeinrichtung FM auf, mit dem der Zustand von Überspannungsschutzeinrichtungen signalsierbar ist. Dieser kann z.B. räumlich als auch farblich getrennt von den dritten Verbindungsmitteln M1, M2, M3 angeordnet sein. Typischerweise werden solche Anschlüsse eher am oberen Rand eines elektrisches Überspannungsschutzgerät 1 angeordnet sein.

Die interne Verschaltung S orientiert sich dabei an der Art des zu schützenden Netzes und ist nur beispielhaft in Figur 7 für eine Art von Netz dargestellt. Andere interne Verschaltung S sind hierdurch nicht ausgeschlossen, sondern ergeben sich für den Fachmann unmittelbar.

### Bezeichnungsliste

- 1: Elektrisches Überspannungsschutzgerät
- 6: erste elektrische Verbindungsmittel
- N, L1, L2, L3, PE: Schienen eines elektrischen Verteilsystems
- A: elektrisches Anschlusselement
- R: Verrastung
- 7: zweite Verbindungsmittel
- M1, M2, M3: dritte Verbindungsmittel
- F: Überstromschutzeinrichtung
- ÜSE1 ... ÜSE4: Überspannungsschutzeinrichtungen
- APE: Anschluss zur Kontaktierung eines Schutzpotentiales
- FS: Funkenstrecke
- Z: Varistor
- TS: thermische Trennstelle
- FM: Fernmeldeeinrichtung
- GDT: Gasableiter
- C: Kondensator
- S: interne Verschaltung

## Patentansprüche

1. Elektrisches Überspannungsschutzgerät (1) aufweisend
• ein Gehäuse zur Aufnahme von Überspannungsschutzeinrichtungen,
• wobei das Gehäuse erste elektrische Verbindungsmittel (6) zur Verbindung mit parallelen Schienen eines elektrischen Verteilsystems (N, L1, L2, L3, PE) aufweist,
• wobei das Gehäuse zweite elektrische Verbindungsmittel (7) zur Verbindung mit parallelen Schienen eines elektrischen Verteilsystems (N, L1, L2, L3, PE) aufweist, wobei die Anzahl der zweiten elektrischen Verbindungsmittel (7) geringer ist als die Anzahl der ersten elektrischen Verbindungsmittel (6),
• wobei die ersten Verbindungsmittel sowohl eine elektrische Verbindung herstellen, als auch eine mechanische Fixierung des elektrischen Überspannungsschutzgerätes auf dem elektrischen Verteilsystem (N, L1, L2, L3, PE) bereitstellen,
• wobei die zweiten Verbindungsmittel nur eine elektrische Verbindung herstellen, aber keine mechanische Fixierung des elektrischen Überspannungsschutzgerätes auf dem elektrischen Verteilsystems (N, L1, L2, L3, PE) bereitstellen,
• wobei die zweiten Verbindungsmittel (7) Potentiale der kontaktierten Schienen zum Abgriff am Gerät bereitstellen,
• wobei die ersten Verbindungsmittel (6) und die zweiten Verbindungsmittel (7) innerhalb des elektrischen Überspannungsschutzgerätes (1) isoliert voneinander sind.

2. Elektrisches Überspannungsschutzgerät (1) nach Anspruch 1, **dadurch gekennzeichnet, dass** an der vom elektrischen Verteilsystem (N, L1, L2, L3, PE) abgewandten Seite dritte Verbindungsmittel (M1, M2) zum Anschluss eines externen Mess- und/oder Steuergeräts vorgesehen sind.

3. Elektrisches Überspannungsschutzgerät (1) nach Anspruch 1 oder 2, **dadurch gekennzeichnet, dass** an der vom elektrischen Verteilsystem (N, L1, L2, L3, PE) abgewandten Seite dritte Verbindungsmittel (M1, M2) zum Anschluss eines externen Mess- und/oder Steuergeräts vorgesehen sind, wobei das elektrische Überspannungsschutzgerät (1) weiterhin eine Überstromschutzeinrichtung (F) aufweist, die eines der an dritten Verbindungsmitteln zur Verfügung gestellten Potentiale schützt.

4. Elektrisches Überspannungsschutzgerät (1) nach Anspruch 3, **dadurch gekennzeichnet, dass** die Überstromschutzeinrichtung (F) steck- und wechselbar ist.

5. Elektrisches Überspannungsschutzgerät (1) nach einem der vorhergehenden Ansprüche, **dadurch gekennzeichnet, dass** das elektrische Überspannungsschutzgerät (1) weiterhin mehrere Überspannungsschutzeinrichtungen (ÜSE1, ÜSE2, ÜSE3, ÜSE4) zum Schutz vor Überspannungen aufweist.

6. Elektrisches Überspannungsschutzgerät (1) nach Anspruch 5, **dadurch gekennzeichnet, dass** die mehreren Überspannungsschutzeinrichtungen (ÜSE1, ÜSE2, ÜSE3, ÜSE4) steck- und wechselbar sind.

7. Elektrisches Überspannungsschutzgerät (1) nach einem der vorhergehenden Ansprüche, **dadurch gekennzeichnet, dass** das elektrische Überspannungsschutzgerät (1) weiterhin einen Anschluss zur Kontaktierung eines Schutzpotentiales (APE) an der vom elektrischen Verteilsystem (N, L1, L2, L3, PE) abgewandten Seite aufweist.

8. Elektrisches Überspannungsschutzgerät (1) nach einem der vorhergehenden Ansprüche, **dadurch gekennzeichnet, dass** das elektrische Überspannungsschutzgerät (1) weiterhin einen Anschluss für eine Fernmeldeeinrichtung aufweist mit dem der Zustand von Überspannungsschutzeinrichtungen signalsierbar ist.

9. Elektrisches Überspannungsschutzgerät (1) nach einem der vorhergehenden Ansprüche, wobei das Gehäuse einen Rückschnitt aufweist, wobei der Rückschnitt sich über mehrere Schienen des elektrischen Verteilsystems erstreckt, sodass ein elektrisches Anschlusselement (A) mit einer sich seitlich in Achsenrichtung einer Schiene versetzt angeordneten Verrastung (R) formschlüssig montiert werden kann.
